Europäisches Patentamt

European Patent Office

Office européen des brevets

(19)

(11) **EP 1 202 279 A1**

(12) # EUROPEAN PATENT APPLICATION

(43) Date of publication:
**02.05.2002 Bulletin 2002/18**

(51) Int Cl.7: **G11B 27/036**, G11B 27/10,
G11B 27/11, H04N 9/804

(21) Application number: **00250366.2**

(22) Date of filing: **01.11.2000**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **27.10.2000 EP 00250362
30.10.2000 EP 00250363**

(71) Applicant: **DEUTSCHE THOMSON-BRANDT
GMBH
78048 Villingen-Schwenningen (DE)**

(72) Inventors:
- **Winter, Marco
  30173 Hannover (DE)**
- **Schiller, Harald
  30539 Hannover (DE)**

(74) Representative: **Hartnack, Wolfgang, Dipl.-Ing.
Deutsche Thomson-Brandt GmbH
European Patent Operations
Karl-Wiechert-Allee 74
30625 Hannover (DE)**

(54) **Method and apparatus for preliminarily erasing parts of a bitstream recorded on a storage medium, and corresponding storage medium**

(57)     DVD Stream Recording allows to recover or permanently erase on-the-fly preliminarily erased cells on the disc. In case of very low-bitrate stream recording there could be less than one application packet and therefore timestamp per Stream Object Unit. In such situation, stuffing is necessary in order to guarantee the proper functioning of the Mapping List data retrieval. To make on-the-fly preliminarily erasure, complete recovery or permanent erase possible even for stuffing data packets located at cell boundaries, to two special timestamps defining a preliminarily erased cell and two other timestamps defining the location of a normal cell a different meaning is assigned under specific circumstances.

Fig.4

EP 1 202 279 A1

**Description**

The invention relates to a method and to an apparatus for preliminarily erasing a part or parts of a bitstream recorded on a storage medium, and relates to a corresponding storage medium, which part or parts can thereafter be erased permanently or reconstructed completely.

Background

The DVD (digital versatile disc) Stream Recording system is defined in the DVD Stream Recording Specification (SR spec.), Version 0.9, and is designed to use rewritable and recordable DVD discs for recording any existing digital bitstreams, editing them and replaying them as bitstreams. According to the SR spec., a Stream Object (SOB) is, in general, one recorded bitstream, i.e. one take, which is stored as a part of a Program Stream as described in e. g. ISO/IEC 13818-1, Systems (MPEG-2). A SOB is composed of one or more Stream Packs, each containing a pack header followed by a Stream Packet. A Stream Packet contains further header data and Application Packets (AP_PKT) to each of which an Application Timestamp (ATS) is assigned. These timestamps enable proper application packet delivery during playback.
On the SR disc, a Stream Object Unit (SOBU) is the basic unit of a SOB and consists of a constant amount of data, 64 Kbytes according to the SR specification. The Stream Object Units include above Application Packets. Neither the SOBU borders nor the Stream Pack border need to be aligned with Application Packet borders.
For data retrieval from the disc a Mapping List is used wherein to each Stream Object Unit a corresponding specific time duration is assigned.
One feature of the DVD Stream Recording Specification is the possibility of temporary erasure (TE) of a cell containing a part of a SOBU or up to several Stream Object Units, followed by either recovery or permanent erasure (PE) of the cell. In the case of permanent erasure, any complete Stream Object Units within the cell can be freed for re-use. A cell can start or end at any application packet.
To each usable side of a disc an information file is assigned, the content of which is stored in a memory, e.g. a RAM, that is part of the streamer device.

Invention

The current version of this DVD Stream Recording Specification allows to re-use or recover on-the-fly temporarily erased cells or areas of a DVD stream recording disc.
In case of very low-bitrate stream recording there could be less than one application packet and therefore less than one ATS per Stream Object Unit. In such situation, stuffing is necessary in order to guarantee the proper functioning of the Mapping List data retrieval. Stuffing is done by means of stuffing packets, and the purpose of these stuffing packets replacing application packets is to ensure that every Stream Object Unit - even in areas where stuffing is performed - contains at least one Application Time Stamp value. But according to the current version of the SR spec., temporary erasure (TE) is not possible for stuffing of Stream Object Units located at TE cell boundaries.
There is the further condition in the SR spec. that a Stream Object must not begin or end with a stuffing packet.
A problem to be solved by the invention is to allow such temporary erasure of cells in connection with stuffing. This problem is solved by the method disclosed in claim 1.
An apparatus that utilises this method is disclosed in claim 2. A storage medium that utilises this method is disclosed in claim 3.
The above mentioned information file can contain a lot of timestamps of different type, which timestamps serve for instance for temporally erasing cells on-the-fly, e.g. an advertisement in a movie.
If during a recording the remaining disc capacity approaches zero, the streamer device can use the temporarily erased cells to free on-the-fly some further recording capacity by searching in the information file for information about the location of such temporarily erased cells, without the need of reading the disc or the stream content itself.
Some of the timestamps are defined such that on-the-fly either a permanent erasure of such temporarily erased cells or stream parts can be carried out, or a complete cell recovery of the original recording is possible even when a temporarily erased cell contains stuffing packets.
Two special timestamps defined in the SR spec. indicate a TE area or cell or bitstream part. Two other timestamps define the location of a normal cell. According to the invention, to some of these four types of timestamps a different meaning is assigned under specific circumstances.
The process of re-using such an area (i.e. temporarily erased cells) is re-defined in order to guarantee a handling consistent with the rest of the DVD SR specification. By such amended timestamp definition it becomes possible to perform temporary erasure, complete recovery and permanent erasure of bitstream areas or cells containing stuffing packets within the Stream Object Units. These features are available even if the erasure area starts or stops at or immediately before or immediately after stuffing packets. Advantageously these functions can be carried out on-the-fly. Under the above SR spec. such features are neither available nor possible.

In principle, the inventive method is suited for preliminarily erasing a part or parts of a bitstream recorded, or to be recorded, on a storage medium, wherein:

- the recorded bitstream is formatted into stream object units each containing at least one application data packet with a corresponding application time stamp or one stuffing data packet or both, of which stream object units one or more form a cell, wherein each succeeding stuffing data packet also has an application time stamp;
- bitstream parts can be marked as being preliminarily erased cells denoted TE cells;
- following marking TE cells, such TE cells can be either permanently erased or completely reconstructed;
- the start and the end of a cell are defined by a cell start time value and a cell end time value;
- the start and the end of a re-usable part of a TE cell are defined by a TE cell start time value and a TE cell end time value;
- said cell and TE cell start and end time values are stored in a separate memory allowing fast access,

wherein in case a TE cell includes at least one boundary between succeeding stream object units and one of said succeeding stream object units includes at least one application data packet and another one of said succeeding stream object units includes at least one stuffing data packet,
involved ones and further adjacent stream object units containing only stuffing data packets are included in said TE cell even if said TE cell would thereby overlap with one or two adjacent TE cells,
wherein the corresponding ones of said time values of a current TE cell are selected as follows:

- the cell start time value corresponds to the application time stamp of the first application packet of said current TE cell;
- the cell end time value corresponds to the application time stamp of the last application packet of said current TE cell;
- if the start recording packet arrival time value of said current TE cell describes the start of a stream object unit, or the TE cell contains the start of the stream object, then the TE cell start time value corresponds to the application time stamp of the first application packet or stuffing packet starting in that stream object unit which contains the application packet or stuffing packet with the start recording packet arrival time of said current TE cell,
  otherwise the TE cell start time value corresponds to the application time stamp of the first application packet or stuffing packet starting in that stream object unit which follows immediately the stream object unit containing the application packet with the corresponding recording packet arrival time value cell start time value;
- the TE cell end time value corresponds to the first application time stamp of the first stream object unit following said current TE cell.

In principle the inventive apparatus is suited for preliminarily erasing a part or parts of a bitstream recorded, or to be recorded, on a storage medium, wherein:

- the recorded bitstream is formatted into stream object units each containing at least one application data packet with a corresponding application time stamp or one stuffing data packet or both, of which stream object units one or more form a cell, wherein each succeeding stuffing data packet also has an application time stamp;
- bitstream parts can be marked as being preliminarily erased cells denoted TE cells;
- following marking TE cells, such TE cells can be either permanently erased or completely reconstructed;
- the start and the end of a cell are defined by a cell start time value and a cell end time value;
- the start and the end of a re-usable part of a TE cell are defined by a TE cell start time value and a TE cell end time value, said apparatus including:

- means for recording data on said storage medium or for reading data from said storage medium;
- interface means for receiving input data for said recording means or for outputting data from said recording means;
- a memory storing said cell and TE cell start and end time values in order to allow fast access to said cell and TE cell start and end time values;
- controlling means for controlling upon user command said preliminary erasure marking and said permanent erasure or complete reconstruction, which controlling means interact with said memory,

wherein in case a TE cell includes at least one boundary between succeeding stream object units and one of said succeeding stream object units includes at least one application data packet and another one of said succeeding stream object units includes at least one stuffing data packet,

involved ones and further adjacent stream object units containing only stuffing data packets are included in said TE cell even if said TE cell would thereby overlap with one or two adjacent TE cells,

wherein the corresponding ones of said time values of a current TE cell are selected as follows:

- the cell start time value corresponds to the application time stamp of the first application packet of said current TE cell;
- the cell end time value corresponds to the application time stamp of the last application packet of said current TE cell;
- if the start recording packet arrival time value of said current TE cell describes the start of a stream object unit, or the TE cell contains the start of the stream object, then the TE cell start time value corresponds to the application time stamp of the first application packet or stuffing packet starting in that stream object unit which contains the application packet or stuffing packet with the start recording packet arrival time of said current TE cell,

otherwise the TE cell start time value corresponds to the application time stamp of the first application packet or stuffing packet starting in that stream object unit which follows immediately the stream object unit containing the application packet with the corresponding recording packet arrival time value cell start time value;
- the TE cell end time value corresponds to the first application time stamp of the first stream object unit following said current TE cell.

In principle the inventive storage medium contains a preliminarily erased part or parts of a bitstream recorded on it, wherein:

- the recorded bitstream is formatted into stream object units each containing at least one application data packet with a corresponding application time stamp or one stuffing data packet or both, of which stream object units one or more form a cell, wherein each succeeding stuffing data packet also has an application time stamp;
- bitstream parts can be marked as being preliminarily erased cells denoted TE cells;
- following marking TE cells, such TE cells can be either permanently erased or completely reconstructed;
- the start and the end of a cell are defined by a cell start time value and a cell end time value;
- the start and the end of a re-usable part of a TE cell are defined by a TE cell start time value and a TE cell end time value,

wherein in case a TE cell includes at least one boundary between succeeding stream object units and one of said succeeding stream object units includes at least one application data packet and another one of said succeeding stream object units includes at least one stuffing data packet, involved ones and further adjacent stream object units containing only stuffing data packets are included in said TE cell even if said TE cell would thereby overlap with one or two adjacent TE cells,

wherein the corresponding ones of said time values of a current TE cell are selected as follows:

- the cell start time value corresponds to the application time stamp of the first application packet of said current TE cell;
- the cell end time value corresponds to the application time stamp of the last application packet of said current TE cell;
- if the start recording packet arrival time value of said current TE cell describes the start of a stream object unit, or the TE cell contains the start of the stream object, then the TE cell start time value corresponds to the application time stamp of the first application packet or stuffing packet starting in that stream object unit which contains the application packet or stuffing packet with the start recording packet arrival time of said current TE cell,

otherwise the TE cell start time value corresponds to the application time stamp of the first application packet or stuffing packet starting in that stream object unit which follows immediately the stream object unit containing the application packet with the corresponding recording packet arrival time value cell start time value;
- the TE cell end time value corresponds to the first application time stamp of the first stream object unit following said current TE cell.

Advantageous additional embodiments are disclosed in the respective dependent claims.

Drawings

Exemplary embodiments of the invention are described with reference to the accompanying drawings, which show in:

Fig. 1    simplified overall system for DVD Stream Recording;
Fig. 2    structure of stream packs containing parts of stuffing packets;
Fig. 3    principle of temporary erasure including reconstruction;
Fig. 4    principle of permanent erasure of a TE part;
Fig. 5    temporary erasure and subsequent permanent erasure;
Fig. 6    temporary erasure and subsequent further temporary erasure and reconstruction of the first temporarily erased cell.

Exemplary embodiments

The following abbreviations are used:

| | |
|---|---|
| AP_PKT | Application Packet, i.e. an actual payload in the bitstream. |
| APAT | Application Packet Arrival Time, an absolute timestamp having e.g. a 48-bit value format. |
| ATS | Application Time Stamp, a timestamp of each Application Packet in the bitstream. |
| ERA_S_APAT | Start APAT of that bitstream part of a TE Cell, which is permanently erasable (on-the-fly), i.e. a temporarily or preliminarily erasure-marked stream cell start time value. |
| ERA_E_APAT | Start APAT of that bitstream part which follows immediately the (on-the-fly) permanently erasable part of a TE Cell, i.e. a temporarily or preliminarily erasure-marked stream cell end time value. |
| IAPAT | Incremental Application Packet Arrival Time, e.g. a 12-bit relative timestamp representing the duration of its assigned SOBU. An IAPAT has a lower resolution than an APAT, i.e. IAPAT is an APAT without its lower significant e.g. 18 bits and without its most significant e.g. 18 bits. |
| MAPL | Mapping List, a list of relative IAPAT timestamps, of which each is assigned to the first application packet arrival time in a SOBU. |
| PE | Permanent erasure. |
| SC_GI | Stream cell general information. |
| S_PCK | Stream Pack, i.e. a bitstream sector including e.g. an MPEG-2 Systems header. |
| SC_S_APAT | Stream Cell Start APAT, the absolute start timestamp of a bitstream part, i.e. a stream cell start time value. It is the timestamp of an AP_PKT. |
| SC_E_APAT | Stream Cell End APAT, the absolute end timestamp of a bitstream part, i.e. a stream cell end time value. It is the timestamp of an AP_PKT. |
| SCR | System Clock Reference, as specified by the MPEG-2 Systems standard. Each bitstream sector has an MPEG-2 Systems header including an SCR. |
| SOB | Stream Object, in general one recording, i.e. one take. |
| SOBU | Stream Object Unit, has a size of 64 Kbytes corresponding to 32 sectors or 32 packs. A SOB consists of N SOBUs with $N \geq 1$. The duration of a SOBU is described by its assigned IAPAT. |
| SOBN | SOB number. |
| SOB_S_APAT | SOB start APAT, the absolute start timestamp of a complete take. |
| SOB_E_APAT | SOB end APAT, the absolute end timestamp of a complete take. |
| SR | DVD Stream Recording. |
| STB | Settop box. |
| TE | Temporary erasure. |
| TE flag | 2-bit flag for a cell:<br>'00b' = normal cell;<br>'01b' = TE cell not including SOBU boundaries,<br>i.e. without ERA_S_APAT and ERA_E_APAT;<br>'10b' = TE cell that includes at least one SOBU boundary, i.e. with ERA_S_APAT and ERA_E_APAT. |

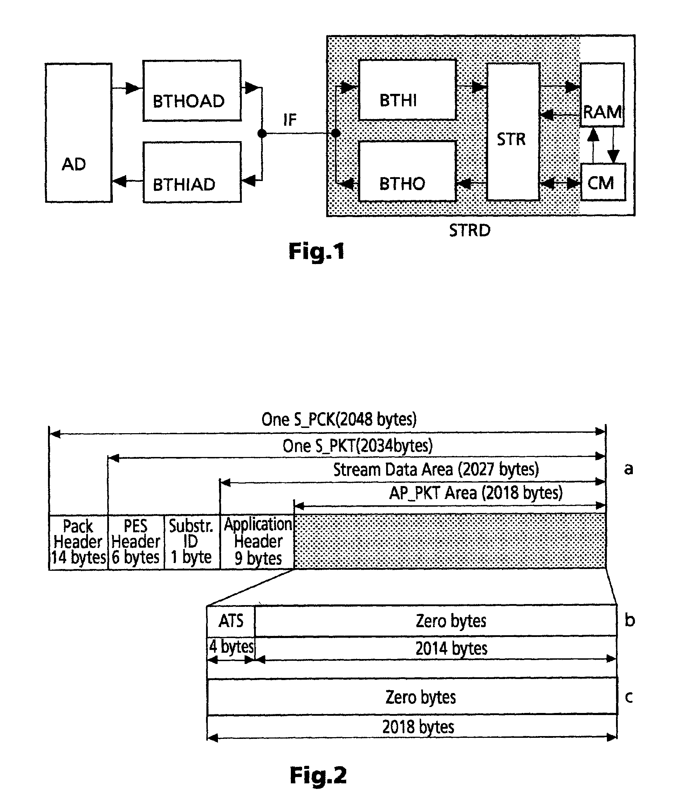

In the simplified overall system block diagram of Fig. 1 an application device AD, for instance a settop box, interacts via an interface IF, e.g. an IEEE1394 interface, with a streamer device STRD, i.e. a DVD SR recorder. A streamer STR within STRD sends its data via output buffering & timestamping handling means BTHO to IF and receives from IF data via input buffering & timestamping handling means BTHI. STRD includes a memory RAM storing the above mentioned information file or files. Controlling means CM control upon user command the preliminary erasure marking and the permanent erasure or complete reconstruction, which controlling means interact with the memory RAM. CM also controls STR.

AD sends its data via output buffering & timestamping handling means BTHOAD to IF and receives from IF data via input buffering & timestamping handling means BTHIAD.

Fig. 2a depicts a stream pack that contains stuffing packets in the 2018-bytes application packet area. Remark: In normal stream packs, it is possible that the 2027-bytes Stream Data Area contains a 9-bytes Application Header, an optional Application Header Extension, one optional stuffing byte and normal application packets. Fig. 2b shows the content of the application packet area for a pack containing the start of a stuffing packet. Fig. 2c shows the content of the application packet area for all subsequent packs containing the remainder of the stuffing packets, if any.

Stuffing packets must comply with the following rules:

- Stuffing packets always begin at the start of the Application Packet (AP_PKT) Area of the pack after the pack containing genuine AP_PKT data.
- Stuffing packets contain one 4-bytes ATS, followed by as many zero bytes as are required to fill the Application Data Areas of the remaining packs of the current SOBU. Therefore, the total length of a stuffing packet is (4 + 2014 + n*2018) bytes, wherein $0 \leq n \leq 31$.

The ATS of a stuffing packet is set as follows:

- In a SOBU where at least one pack contains genuine AP_PKT data, the ATS of the stuffing packet is set to the ATS of the AP_PKT preceding the stuffing packet.
- In a SOBU#k wherein no real AP_PKT data are contained, the ATS of the stuffing packet is set to

$$ATS = SUM\_IAPAT(k-1)[13..0]*2^{18},$$

wherein SUM_IAPAT(k-1) is the summation of the IAPAT values from number 1 until number (k-1) and 'SUM_IAPAT (k-1) [13..0]' denotes the 14 least significant bits of SUM_IAPAT(k-1).

All packs containing stuffing packets or parts of stuffing packets are to be constructed as follows:

- The SCR of the Pack header is calculated according to SCR = SCR_previous + (2048*8 bits)/(10.08 Mbps), wherein SCR_previous denotes the SCR of the previous pack.
- The PES Packet Header and sub_stream_id are to be specified like for all other PES Packets according to:

| Field | Number of bits | Number of bytes | Value | Comment |
|---|---|---|---|---|
| packet_start_code_ prefix | 24 | 3 | 00 0001h | |
| stream_id | 8 | 1 | 1011 1111b | private stream _2 |
| PES_packet_length | 16 | 2 | 07ECh | 2028 |
| sub_stream_id | 8 | 1 | 0000 0010b | stream Recording Data |

The features for temporal erasure are:

- The Format allows complete reconstruction for any TE part of a stream.
- The Format allows for the TE parts start and end location marks that are time-based with APAT precision, because a user is not aware of the technical features allowed by the SOBs, SOBUs or MAPLs.
- During a recording, the Format allows that the TE parts are permanently erasable without any view into the stream, i.e. without reading corresponding information from the disc (this represents a real-time recycling of disc capacity).

The realisation of these preconditions is achieved by using a TE flag inside the Cells. A Cell represents a part of a bitstream. A Cell is described by its start timestamp (SC_S_APAT), its end timestamp (SC_E_APAT) and the related take or SOB number (SOBN), and the TE flag indicates Cells that are temporarily erased.

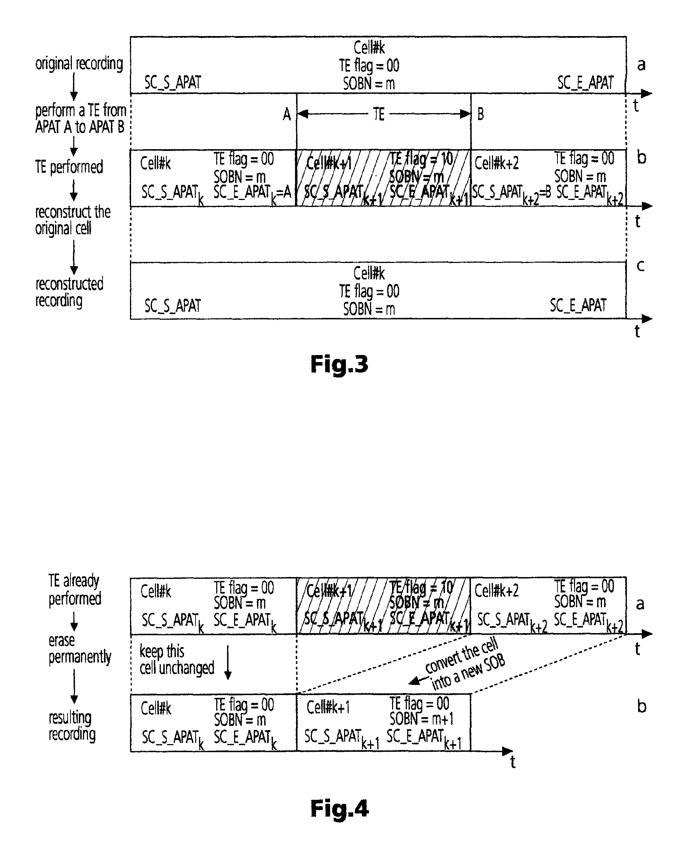

Fig. 3 to 6 each show one single recording or take, according to the current SR spec., that is initially represented by a single cell#k with TE flag '00'. When temporally erasing a part of the recording, the original cell#k is split into e.g. cell#k, cell#k+1 and cell#k+2, wherein cell#k+1 is the cell to be temporally erased, getting a TE flag '10' or '01' depending on whether a SOBU boundary is included or not.

Fig. 3 shows the principle of performing the TE process and the complete reconstruction of the original cell. The TE cell occupies the range between time instants A and B that are represented by $SC\_E\_APAT_k$ and $SC\_S\_APAT_{k+1}$.

Fig. 4 depicts the principle of a PE of a TE part: cell#k is kept unchanged with SOBN = m, initial TE cell#k+1 is erased permanently, and cell#k+2 becomes new cell#k+1 representing a new SOB with SOBN = m + 1.

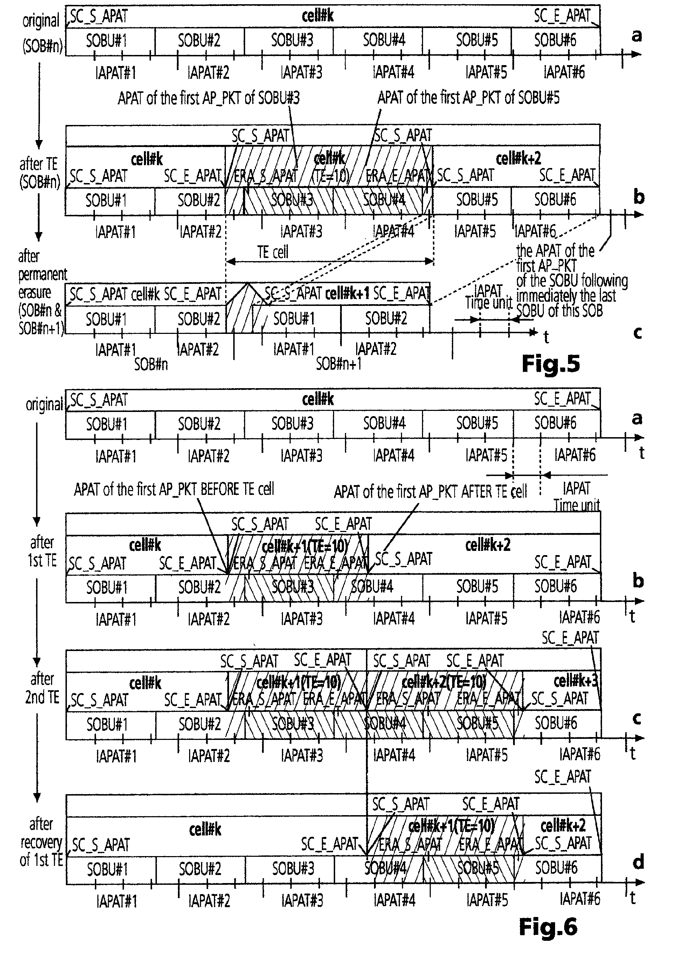

Fig. 5a and Fig. 6a show the SOBUs/IAPATs #1 to #6 of original cell#k. Fig. 5b shows a TE cell including three SOBU borders. SC_S_APAT and SC_E_APAT of TE cell#k+1 are located prior to ERA_S_APAT of SOBU#3 and after ERA_E_APAT of SOBU#4, respectively. Following PE of this cell, SOBU#5/ IAPAT#5 and SOBU#6/IAPAT#8 of original cell#k+2 of SOB#n become SOBU#1/IAPAT#1 and SOBU#2/IAPAT#2, respectively, of cell#k+1 of new SOB#n+1.

Fig. 6b depicts a TE cell#k+1 according to Fig. 5b, but including two SOBU borders only. In Fig. 6c a further bitstream part TE cell#k+2 directly following TE cell #k+1 is shown. The remaining part of previous cell#k+2 is now cell#k+3. In Fig. 6d previous TE cell#k+1 part is recovered and belongs again to original cell#k. Previous TE cell#k+2 becomes TE cell#k+1 and previous cell#k+3 is now renamed to cell#k+2.

The grey parts in Fig. 5 and 6 mark non-presentable TE parts of the bitstream. The dark grey parts mark temporarily erased complete SOBUs.

According to the invention, a special definition of the timestamps or time values SC_S_APAT, SC_E_APAT, ERA_S_APAT and ERA_E_APAT allows on-the-fly a flexible combination of TE and recovery as well as TE and PE, even if stuffing packets are involved.

The inventive timestamp or time value definition is done in such a way that neither SC_S_APAT nor SC_E_APAT point to a stuffing packet.

ERA_S_APAT and ERA_E_APAT only are allowed to point to stuffing packets.

This is necessary to fulfil the following requirement of the current SR specification: it is prohibited for a presentable cell (i.e. a normal or non-TE cell) to start or to end with stuffing (i.e. at a stuffing packet), even if contiguous to an on-the-fly permanent erasure of a TE cell.

*Concerning the inventive rules for SC_S_APAT and SC_E_APAT for cells:*

The normal cells and the TE cells point into its assigned SOB, i.e. if SC_E_APAT is equal to SOB_E_APAT of its assigned SOB, then the corresponding cell ends with the last Application Packet (AP_PKT) of its assigned SOB.

The following nomenclature is used:

a) Cell#k denotes a normal or an TE cell.
b) $SC\_S\_APAT_k$ and $SC\_E\_APAT_k$ denote the APAT of the first and the last AP_PKT of cell#k
c) SOBN(k) denotes the assigned SOB number of cell#k.

With this nomenclature, SC_S_APAT and SC_E_APAT of normal cells and TE cells are defined by the following rules:

a) $SOB\_S\_APAT_{SOBN(k)} \leq SC\_S\_APAT_k \leq SC\_E\_APAT_k \leq SOB\_E\_APAT_{SOBN(k)}$;
b) $SC\_S\_APAT_k$ is equal to the APAT of the AP_PKT inside SOB#SOBN(k) which represents the first AP_PKT of cell#k;
c) $SC\_E\_APAT_k$ is equal to the APAT of the AP_PKT inside SOB#SOBN(k) which represents the last AP_PKT of cell#k.

*Concerning the inventive rules for ERA_S_APAT and ERA_E_APAT for TE cells:*

Only if a TE cell covers at least one SOBU border (start or end of a SOBU) the general information SC_GI of this TE cell contains ERA_S_APAT and ERA_E_APAT. These two APATs mark those SOBUs which are completely covered by a TE Cell. This information is advantageous for re-using the TE SOBUs on-the-fly, i.e. without any view into the stream stored on the disc or storage medium.

If stuffing packets are present in the bitstream, a TE cell always includes any stuffing packets immediately preceding and any stuffing packets immediately following the application packets of the TE cell. This stuffing is included only by the ERA_S_APAT and ERA_E_APAT timestamps of the TE cell considered, whereas the SC_S_APAT and SC_E_APAT timestamps describe the first and last AP_PKT only of this TE cell.

In case of empty SOBUs that contain stuffing packets only, between two contiguous TE cells, ERA_E_APAT of the previous TE cell will be greater than BRA_S_APAT of the following TE cell. Such two TE cells are denoted Previous and Following Overlapping TE cells.

The inventive definition of BRA_S_APAT and ERA_E_APAT is:

a) If the start APAT of a TE cell describes the start of a SOBU (i.e. including the first byte of the first AP_PKT area of that normal or empty SOBU) or the TE cell contains the start of the SOB, then:

ERA_S_APAT is equal to the APAT of the first Packet (Application or Stuffing Packet) starting in that SOBU which contains the Packet (Application or Stuffing Packet) with the start APAT of the TE cell.

b) In all other cases:

ERA_S_APAT is equal to the APAT of the first Packet (Application or Stuffing Packet) starting in that SOBU which follows immediately the SOBU containing the AP_PKT with the APAT SC_S_APAT.

c) ERA_E_APAT is equal to the APAT of the first AP_PKT starting in that SOBU which contains the AP_PKT immediately following the TE Cell.

It may happen that the first byte of a TE cell defined by SC_S_APAT is not the first byte of the first AP_PKT area of a current SOBU. In such case the last AP_PKT of the previous SOBU has one or more bytes contained in the beginning of the current SOBU (a corresponding statement is true for the last byte of a TE cell). In such case ERA_S_APAT points to the SOBU immediately following the current SOBU.

The above definitions for ERA_S_APAT and ERA_E_APAT assume that an AP_PKT exists after the last AP_PKT of the SOB. However, this AP_PKT does not really exist. Therefore, the following rules define the APAT of the AP_PKT following immediately the last AP_PKT of this SOB:

- this APAT is an integer multiple of the IAPAT Time Unit and
- this APAT is greater than the APAT of the last AP_PKT of this SOB and

    this APAT is as close as possible to the last AP_PKT of the SOB and
    this APAT is handled as the APAT of the first AP_PKT starting in a SOBU.

If ERA_S_APAT is equal to ERA_E_APAT, no complete SOBU is covered by the TE cell. A TE cell contains complete SOBUs only for the case ERA_S_APAT < ERA_E_APAT. If, however, ERA_S_APAT is equal to ERA_E_APAT for consecutive TE cells of a TE cell chain, then this indicates that complete SOBUs are located between the TE cells.

TE cells that start after the first AP_PKT starting in a SOBU and end before the last AP_PKT starting in the same SOBU will have no ERA_S_APAT and no ERA_E_APAT. The corresponding TE flag is '01b'.

*Re-use of TE cells on-the-fly during recording:*

To those TE cells, which contain a SOBU boundary, the special APATs ERA_S_APAT and ERA_E_APAT are assigned. The purpose of these two special APATs is to allow re-using TE SOBUs during recording, i.e. when the disc becomes full during recording the Streamer device is able to permanently erase TE cells in order to make new free SOBUs available for continuing the recording without any break. The parameters SC_S_APAT and SC_E_APAT of the TE cell are not exact enough for this purpose, because a search via the mapping list MAPL containing the IAPATs can result in two possible positions of the assigned SOBU (SOBU#m or SOBU#m+1). Therefore a search via the MAPL would require an additional search inside the stream, which is not feasible in real-time. But with the time values ERA_S_APAT and ERA_E_APAT that are stored in the information file RAM the exact SOBU position is locatable without any view into the stream stored on the storage medium.

If one of two Overlapping TE cells are to be permanently erased or completely recovered, a special handling of the remaining Overlapping TE cell is necessary:

a) Permanent erasure or complete recovery of the Previous Overlapping TE cell:

Use ERA_E_APAT of the Previous Overlapping TE cell as new ERA_S_APAT of the Following Overlapping TE cell.

b) Permanent erasure or complete recovery of the Following Overlapping TE cell:

Use ERA_S_APAT of the Following Overlapping TE cell as new ERA_E_APAT of the Previous Overlapping TE cell.

The following shows an inventive example process for a sequence of erasures for comparison with Fig. 6. There are three steps of the process:

a) generate a first TE cell;
b) generate a second TE cell that is immediately following the first TE cell;
c) perform a permanent erasure of the first TE cell,

wherein '1' denotes an application packet AP_PKT, '2' denotes a stuffing packet containing stuffing bytes.

a) after first TE

The first TE cell occupies an area from the first AP_PKT in SOBU#1 to the last AP_PKT in SOBU#2 and the following stuffing SOBU (SOBU#3).

```
    A                  C                  D                                B
    |111111111|111111222|222222222|111111111|111111111|11111111|
      SOBU#1     SOBU#2     SOBU#3     SOBU#4     SOBU#5     SOBU#6
    |<------- cell#1 (TE) ------->|<--------- cell#2 --------->|


    A = SC_S_APAT(TE) = ERA_S_APAT
    C = SC_E_APAT(TE)
    D = SC_S_APAT =     ERA_E_APAT
    B = SC_E_APAT
```

b) after second TE
The second TE cell occupies an area from the stuffing SOBU
(SOBU#3) to the third AP_PKT in SOBU#5.

```
    E                  F  G          H          I JK              L
    |111111111|111111222|222222222|111111111|111111111|11111111|
      SOBU#1     SOBU#2     SOBU#3     SOBU#4     SOBU#5     SOBU#6
    |<------- cell#1 (TE) ------->|              |<-- cell#3 -->|
                      |<---- cell#2 (TE)---->|


    E = SC_S_APAT cell#1 (TE) = ERA_S_APAT cell#1
    F = SC_E_APAT cell#1 (TE)
    G =                         ERA_S_APAT cell#2
    H = SC_S_APAT cell#2 (TE) = ERA_E_APAT cell#1
    I =                         ERA_E_APAT cell#2
    J = SC_E_APAT cell#2 (TE)
    K = SC_S_APAT cell#3
    L = SC_E_APAT cell#3
```

SOBU#3 is the overlapping area of the Overlapping TE cells
#1 and #2.


Now, TE cell #2 shall be permanently erased, i.e. ERA_S_APAT
of cell #2 shall be set to ERA_E_APAT of cell #1.
c) after PE of TE cell#1

```
    H       I    JK                 L
   |111111111|111111111|111111111|
     SOBU#1     SOBU#2     SOBU#3
   |<-TEcell#1->||<-- cell#2 -~->|


   H = SC_S_APAT cell#1 (TE) = ERA_S_APAT cell#1
   I =                         ERA_E_APAT cell#1
   J = SC_E_APAT cell#1 (TE)
   K = SC_S_APAT cell#2
   L = SC_E_APAT cell#2
```

This inventive procedure allows erasure and re-use on-the-fly, i.e. without any additional view into the stream stored on the storage medium.

It is also possible to already mark TE cells according to the invention at recording time.

The application packets may contain any type of data, e.g. video or audio or additional data like service information. The data rate to be handled in -the streamer may therefore occupy a range from e.g. 3 kbit/s for audio signals up to e.g. an 80 Mbit/s peak data rate value for detailed complexly moving scenes of video signals.

**Claims**

1. Method for preliminarily erasing a part or parts of a bitstream recorded (STR), or to be recorded, on a storage medium, wherein:

   - the recorded bitstream is formatted into stream object units (SOBU) each containing at least one application data packet (AP_PKT) with a corresponding application time stamp (ATS) or one stuffing data packet or both, of which stream object units one or more form a cell,

   wherein each succeeding stuffing data packet also has an application time stamp (ATS);

   - bitstream parts can be marked as being preliminarily erased cells denoted TE cells;
   - following marking TE cells, such TE cells can be either permanently erased (PE) or completely reconstructed;
   - the start and the end of a cell are defined by a cell start time value (SC_S_APAT) and a cell end time value (SC_E_APAT);
   - the start and the end of a re-usable part of a TE cell are defined by a TE cell start time value (ERA_S_APAT) and a TE cell end time value (ERA_E_APAT);
   - said cell and TE cell start and end time values are stored in a separate memory (RAM) allowing fast access,

   **characterised in that** in case a TE cell includes at least one boundary between succeeding stream object units (SO-BU$_k$, SOBU$_{k+1}$) and one of said succeeding stream object units includes at least one application data packet and another one of said succeeding stream object units includes at least one stuffing data packet, involved ones and further adjacent stream object units containing only stuffing data packets are included in said TE cell even if said TE cell would thereby overlap with one or two adjacent TE cells, wherein the corresponding ones of said time values of a current TE cell are selected as follows:

   - the cell start time value (SC_S_APAT) corresponds to the application time stamp (ATS) of the first application packet (AP_PKT) of said current TE cell;
   - the cell end time value (SC_E_APAT) corresponds to the application time stamp (ATS) of the last application packet (AP_PKT) of said current TE cell;
   - if the start recording packet arrival time value of said current TE cell describes the start of a stream object unit (SOBU), or the TE cell contains the start of the stream object, then the TE cell start time value (ERA_S_APAT) corresponds to the application time stamp (ATS) of the first application packet or stuffing packet starting **in that** stream object unit which contains the application packet or stuffing packet with the start recording packet arrival time of said current TE cell, otherwise the TE cell start time value (ERA_S_APAT) corresponds to the application time stamp (ATS) of the first application packet or stuffing packet starting **in that** stream object unit (SOBU) which follows immediately the stream object unit containing the application packet with the corresponding recording packet arrival time value cell start time value (SC_S_APAT);

- the TE cell end time value (ERA_E_APAT) corresponds to the first application time stamp (ATS) of the first stream object unit (SOBU) following said current TE cell.

2. Apparatus for preliminarily erasing a part or parts of a bitstream recorded (STR), or to be recorded, on a storage medium, wherein:

- the recorded bitstream is formatted into stream object units (SOBU) each containing at least one application data packet (AP_PKT) with a corresponding application time stamp (ATS) or one stuffing data packet or both, of which stream object units one or more form a cell,

wherein each succeeding stuffing data packet also has an application time stamp (ATS);

- bitstream parts can be marked as being preliminarily erased cells denoted TE cells;
- following marking TE cells, such TE cells can be either permanently erased (PE) or completely reconstructed;
- the start and the end of a cell are defined by a cell start time value (SC_S_APAT) and a cell end time value (SC_E_APAT);
- the start and the end of a re-usable part of a TE cell are defined by a TE cell start time value (ERA_S_APAT) and a TE cell end time value (ERA_E_APAT), said apparatus including:

- means (STR) for recording data on said storage medium or for reading data from said storage medium;
- interface means (BTHI, BTHO) for receiving input data for said recording means or for outputting data from said recording means;
- a memory (RAM) storing said cell and TE cell start and end time values in order to allow fast access to said cell and TE cell start and end time values;
- controlling means (CM) for controlling upon user command said preliminary erasure marking and said permanent erasure or complete reconstruction, which controlling means interact with said memory,

**characterised in that** in case a TE cell includes at least one boundary between succeeding stream object units (SO-BU$_k$, SOBU$_{k+1}$) and one of said succeeding stream object units includes at least one application data packet and another one of said succeeding stream object units includes at least one stuffing data packet, involved ones and further adjacent stream object units containing only stuffing data packets are included in said TE cell even if said TE cell would thereby overlap with one or two adjacent TE cells, wherein the corresponding ones of said time values of a current TE cell are selected as follows:

- the cell start time value (SC_S_APAT) corresponds to the application time stamp (ATS) of the first application packet (AP_PKT) of said current TE cell;
- the cell end time value (SC_E_APAT) corresponds to the application time stamp (ATS) of the last application packet (AP_PKT) of said current TE cell;
- if the start recording packet arrival time value of said current TE cell describes the start of a stream object unit (SOBU), or the TE cell contains the start of the stream object, then the TE cell start time value (ERA_S_APAT) corresponds to the application time stamp (ATS) of the first application packet or stuffing packet starting **in that** stream object unit which contains the application packet or stuffing packet with the start recording packet arrival time of said current TE cell, otherwise the TE cell start time value (ERA_S_APAT) corresponds to the application time stamp (ATS) of the first application packet or stuffing packet starting **in that** stream object unit (SOBU) which follows immediately the stream object unit containing the application packet with the corresponding recording packet arrival time value cell start time value (SC_S_APAT) ;
- the TE cell end time value (ERA_E_APAT) corresponds to the first application time stamp (ATS) of the first stream object unit (SOBU) following said current TE cell.

3. Storage medium containing a preliminarily erased part or parts of a bitstream recorded on it, wherein:

- the recorded bitstream is formatted into stream object units (SOBU) each containing at least one application data packet (AP_PKT) with a corresponding application time stamp (ATS) or one stuffing data packet or both, of which stream object units one or more form a cell,

wherein each succeeding stuffing data packet also has an application time stamp (ATS);

- bitstream parts can be marked as being preliminarily erased cells denoted TE cells;
- following marking TE cells, such TE cells can be either permanently erased (PE) or completely reconstructed;
- the start and the end of a cell are defined by a cell start time value (SC_S_APAT) and a cell end time value (SC_E_APAT);
- the start and the end of a re-usable part of a TE cell are defined by a TE cell start time value (ERA_S_APAT) and a TE cell end time value (ERA_E_APAT),

**characterised in that** in case a TE cell includes at least one boundary between succeeding stream object units (SO-BU$_k$, SOBU$_{k+1}$) and one of said succeeding stream object units includes at least one application data packet and another one of said succeeding stream object units includes at least one stuffing data packet, involved ones and further adjacent stream object units containing only stuffing data packets are included in said TE cell even if said TE cell would thereby overlap with one or two adjacent TE cells, wherein the corresponding ones of said time values of a current TE cell are selected as follows:

- the cell start time value (SC_S_APAT) corresponds to the application time stamp (ATS) of the first application packet (AP_PKT) of said current TE cell;
- the cell end time value (SC_E_APAT) corresponds to the application time stamp (ATS) of the last application packet (AP_PKT) of said current TE cell;
- if the start recording packet arrival time value of said current TE cell describes the start of a stream object unit (SOBU), or the TE cell contains the start of the stream object, then the TE cell start time value (ERA_S_APAT) corresponds to the application time stamp (ATS) of the first application packet or stuffing packet starting **in that** stream object unit which contains the application packet or stuffing packet with the start recording packet arrival time of said current TE cell, otherwise the TE cell start time value (ERA_S_APAT) corresponds to the application time stamp (ATS) of the first application packet or stuffing packet starting **in that** stream object unit (SOBU) which follows immediately the stream object unit containing the application packet with the corresponding recording packet arrival time value cell start time value (SC_S_APAT);
- the TE cell end time value (ERA_E_APAT) corresponds to the first application time stamp (ATS) of the first stream object unit (SOBU) following said current TE cell.

4. Method or apparatus or storage medium according to any of claims 1 to 3, wherein in case a current TE cell overlaps with a previous TE cell and the previous TE cell is to be permanently erased or completely recovered, or was permanently erased or completely recovered, the TE cell end time value (ERA_E_APAT) of the previous TE cell is used as the TE cell start time value (ERA_S_APAT) for the current TE cell.

5. Method or apparatus or storage medium according to any of claims 1 to 4, wherein in case a current TE cell overlaps with a following TE cell and the following TE cell is to be permanently erased or completely recovered, or was permanently erased or completely recovered, the TE cell start time value (ERA_S_APAT) of the following TE cell is used as the TE cell end time value (ERA_E_APAT) for the current TE cell.

6. Method or apparatus or storage medium according to any of claims 1 to 5, wherein said application data packets (AP_PKT) contain encoded video data.

7. Method or apparatus or storage medium according to any of claims 1 to 5, wherein said application data packets (AP_PKT) contain encoded audio data.

8. Method or apparatus or storage medium according to any of claims 1 to 7, wherein content of the recorded bitstream, or of the bitstream to be recorded, stems from an MPEG-2 Systems standard source signal.

9. Method or apparatus or storage medium according to any of claims 1 to 8, wherein, in case the first byte of a TE cell is not the first byte of the first application data packet (AP_PKT) area of the current stream object unit (SOBU), the TE cell start time value (ERA_S_APAT) points to the stream object unit immediately following said current stream object unit.

**10.** Method or apparatus according to any of claims 1 to 9, wherein, following said preliminary erasure, for re-using on-the-fly freed stream object units (SOBU) of permanent on-the-fly erased TE cells, the current TE cell start time value (ERA_S_APAT) and the current TE cell end time value (ERA_E_APAT) of a current TE cell are read from said separate memory (RAM).

**11.** Method or apparatus according to any of claims 1 to 10, wherein the bitstream recorded was provided, or the bitstream to be recorded is provided, via an IEEE 1394 interface.

**Fig.1**

**Fig.2**

EP 1 202 279 A1

**Fig.3**

**Fig.4**

16

**Fig.5**

**Fig.6**

European Patent

Office

## EUROPEAN SEARCH REPORT

Application Number

EP 00 25 0366

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | US 2001/014058 A1 (ITO YUUJI ET AL) 16 August 2001 (2001-08-16) * sections [389]-[617] * & X: WO 00 46803 A (2000-08-10) --- | 1-3,6-11 | G11B27/036 G11B27/10 G11B27/11 H04N9/804 |
| A | EP 1 021 048 A (TOKYO SHIBAURA ELECTRIC CO) 19 July 2000 (2000-07-19) * page 7, line 2-18 * ----- | 1-11 | |

TECHNICAL FIELDS
SEARCHED (Int.Cl.7)

G11B
H04N

The present search report has been drawn up for all claims

| Place of search | Date of completion of the search | Examiner |
|---|---|---|
| THE HAGUE | 22 February 2002 | Mourik, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**    EP 00 25 0366

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2002

| Patent document cited in search report | | Publication date | Patent family member(s) | | Publication date |
|---|---|---|---|---|---|
| US 2001014058 | A1 | 16-08-2001 | WO<br>US | 0046803 A1<br>2001014070 A1 | 10-08-2000<br>16-08-2001 |
| EP 1021048 | A | 19-07-2000 | EP<br>JP<br>US<br>US<br>US<br>US<br>US | 1021048 A2<br>2000268537 A<br>2001009604 A1<br>2001010755 A1<br>2001009605 A1<br>2001012443 A1<br>2001014201 A1 | 19-07-2000<br>29-09-2000<br>26-07-2001<br>02-08-2001<br>26-07-2001<br>09-08-2001<br>16-08-2001 |

EPO FORM P0459

For more details about this annex : see Official Journal of the European Patent Office, No. 12/82